# EUROPEAN PATENT APPLICATION

(11) **EP 3 110 162 A1**
(43) Date of publication of application: **28.12.2016**
(21) Application number: 15197504.2
(22) Date of filing: 02.12.2015
(51) Int. Cl.: H04N 21/414, H04N 21/431, H04N 21/4722, H04N 21/4728

(54) **ENHANCED AUGMENTED REALITY MULTIMEDIA SYSTEM**

(30) Priority: 25.06.2015 US 201514750699
(71) Applicant: STMicroelectronics International N.V., 1118 BH Amsterdam (NL)
(72) Inventor: SHARMA, Amit, 201301 Noida (IN); JAIRATH, Gaurav, 110051 Delhi (IN); SINGH, Paramanand, 201301 Uttar Pradesh (IN); SRIVASTAVA, AmitKumar, 201308 UP (IN)
(74) Representative: Smith, Gary John

(57) **Abstract**

A method for operating an augmented reality system includes acquiring video data from a camera sensor or video file, and identifying at least one region of interest within the video data. Augmented reality data is generated for the region of interest without receiving user input, with the augmented reality data being contextually related to the region of interest. The video data may be displayed with the augmented reality data superimposed thereupon in real time as the video data is acquired from the camera sensor or video file. The video data and the augmented reality data are stored in a non-conflated fashion. The video data may be displayed with updated AR content acquired for stored AR metadata during later playback. The method therefore allows the storage of AR ROI's and data from any suitable sensor as metadata, so that later retrieval is possible in the absence of additional processing.

## Description

### TECHNICAL FIELD

This disclosure relates to the field of augmented reality systems.

### BACKGROUND

Augmented reality is a live direct or indirect view of a physical, real-world environment whose elements are augmented by computer-generated sensory input such as sound, video, graphics or GPS data. Augmentation is conventionally used in real-time and in semantic context with environmental elements. An example of augmented reality is the display of information about an object as the object is viewed in a viewfinder in real time, using a device such as a smartphone or tablet.

If augmented reality is recorded for later playback with the augmented reality additions being conflated with the original images in the viewfinder, the result is nothing more than an edited video stream. While this does present information to the viewer other than the original viewfinder content itself, options during playback are virtually nonexistent, leaving the augmented reality additions less useful than they might otherwise be.

Accordingly, further developments in the field of augmented reality are desired.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

A method for operating an augmented reality system includes acquiring video data from a camera sensor or video file, and identifying at least one region of interest within the video data. Augmented reality data is generated for the at least one region of interest without receiving user input, with the augmented reality data being contextually related to the at least one region of interest. The video data is displayed with the augmented reality data superimposed thereupon in real time as the video data is acquired from the camera sensor or video file. The video data and the augmented reality data are stored in a non-conflated fashion. The method may further comprise acquiring audio data from an audio transducer contemporaneously with acquisition of the video data; and wherein the contextual relation between the augmented reality data and the at least one region of interest may comprise results of audio analysis performed on sound originating from the at least one region of interest. The video data may be stored in a video file, and wherein the augmented reality data may be stored in a metadata portion of the video file. Identifying at least one region of interest may comprise identifying multiple regions of interest; and further comprising: determining multiple regions of interest that relate to a same object; determining at least one start-stop time stamp that encompasses contiguous presence of at least one of the multiple regions of interest in the video data; determining at least one start-stop time stamp for regions of interest that relate to different objects; and storing the at least one start-stop time stamp that encompasses the contiguous presence of at least one of the multiple regions of interest in the video data and the at least one start-stop time stamp for regions of interest that relate to different objects in the metadata portion of the video file. The video data may be stored in a video file; and wherein the augmented reality data may be stored in a metadata file separate from but associated with the video file. The at least one region of interest may comprise multiple regions of interest; and the method may further comprise: determining multiple regions of interest that relate to a same object; determining at least one start-stop time stamp that encompasses contiguous presence of at least one of the multiple regions of interest in the video data; determining at least one start-stop time stamp for regions of interest that relate to different objects; and storing the at least one start-stop time stamp that encompasses the contiguous presence of the multiple regions of interest in the video data and the at least one start-stop time stamp for regions of interest that relate to different objects in the metadata file separate from but associated with the video file. The method may further comprise displaying the stored video data in non-real-time. The new augmented reality data contextually related to the augmented reality data may be displayed superimposed on the stored video data as it is displayed in non-real-time. The contextual relation between the new augmented reality data and the augmented reality data may comprise at least one of: an orientation of a camera sensor that acquires the video data, a GPS coordinate of where the video data is acquired, results of image analysis performed on the at least one region of interest, results of facial recognition performed on the at least one region of interest, results of character recognition performed on the at least one region of interest, results of object recognition performed on the at least one region of interest, results of an image search performed on the at least one region of interest, weather conditions associated with the at least one region of interest, an accelerometer reading, and a compass reading. At least some of the augmented reality data may also be displayed superimposed on the stored video data as it is displayed in non-real-time. The contextual relation between the augmented reality data and the at least one region of interest may comprise at least one of: an orientation of a camera sensor that acquires the video data, a GPS coordinate of where the video data is acquired, results of image analysis performed on the at least one region of interest, results of facial recognition performed on the at least one region of interest, results of character recognition performed on the at least one region of interest, results of object recognition performed on the at least one region of interest, results of an image search performed on the at least one region of interest, weather conditions associated with the at least one region of interest, an accelerometer reading, and a compass reading. The method may further comprise updating the stored augmented reality data. The method may further comprise accepting user edits of the stored augmented reality data and/or the at least one region of interest.

Another aspect is directed to an electronic device including a camera sensor, a display, a non-voltaile storage unit, and a processor. The processor is configured to acquire video data from the camera sensor or a video file, identify at least one region of interest within the video data, and generate augmented reality data for the at least one region of interest without receiving user input, with the augmented reality data being contextually related to the at least one region of interest. The processor is further configured to display the video data with the augmented reality data superimposed thereupon, in real time as the video data is acquired from the camera sensor or video file, on the display, and store the video data and the augmented reality data in the non-volatile storage unit. The processor may store the video data in a video file in the non-volatile storage unit; and wherein the processor may store the augmented reality data in a metadata portion of the video file. The at least one region of interest comprises multiple regions of interest; and wherein the processor is further configured to: determine multiple regions of interest that relate to a same object; determine at least one start-stop time stamp that encompasses contiguous presence of the multiple regions of interest in the video file; determine at least one start-stop time stamp for regions of interest that relate to different objects; and store the at least one start-stop time stamp that encompasses the contiguous presence of the multiple regions of interest in the video file and the at least one start-stop time stamp for regions of interest that relate to different objects in the metadata portion of the video file, in the non-volatile storage unit. The video data may be stored in a video file; and wherein the augmented reality data may be stored in a metadata file separate from but associated with the video file. The at least one region of interest may comprise multiple regions of interest; and wherein the processor may be further configured to: determine multiple regions of interest that relate to a same object; determine at least one start-stop time stamp that encompasses contiguous presence of the multiple regions of interest in the video file; determine at least one start-stop time stamp for regions of interest that relate to different objects; and store the at least one start-stop time stamp that encompasses the contiguous presence of the multiple regions of interest in the video file and the at least one start-stop time stamp for regions of interest that relate to different objects in the metadata file separate from but associated with the video file, in the non-volatile storage unit.

### BRIEF DESCRIPTION OF THE DRAWINGS

FIG. 1 is a schematic block diagram of an electronic device on which the augmented reality processing techniques of this disclosure can be performed.
FIG. 2 is a flowchart of an augmented reality processing technique in accordance with this disclosure.
FIG. 3 is a flowchart of an augmented reality generation and display technique in accordance with this disclosure.
FIG. 4 is a flowchart illustrating playback of video data, and optionally augmented reality data, in accordance with this disclosure.

### DETAILED DESCRIPTION

One or more embodiments will be described below. These described embodiments are only examples of implementation techniques, as defined solely by the attached claims. Additionally, in an effort to provide a focused description, irrelevant features of an actual implementation may not be described in the specification.

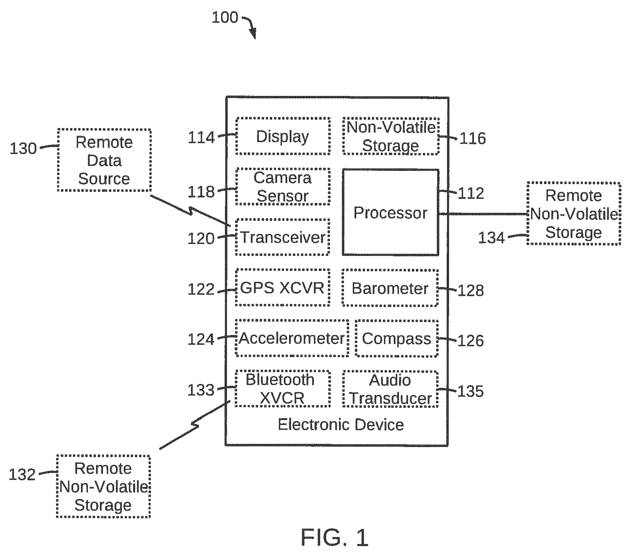

With initial reference to FIG. 1, an electronic device 100 which may be used to perform augmented reality techniques is now described. The electronic device 100 may be a smartphone, tablet, augmented reality headset, or other suitable electronic device. The electronic device 100 includes a processor 112 having an optional display 112, an optional non-volatile storage unit 116, an optional camera sensor 118, an optional transceiver 120, an optional GPS transceiver 122, an optional accelerometer 124, an optional compass 126, an optional barometer 128, an optional Bluetooth transceiver 133, and an optional audio transducer 135 coupled thereto. The display 114 may be touch sensitive in some cases, and the non-volatile storage unit 116 may be a magnetic or solid state storage unit, such as a hard drive, solid state drive, or flash RAM. The camera sensor 118 may be a CMOS camera sensor, and the transceiver 120 may be a cellular transceiver, WiFi transceiver, or Bluetooth transceiver.

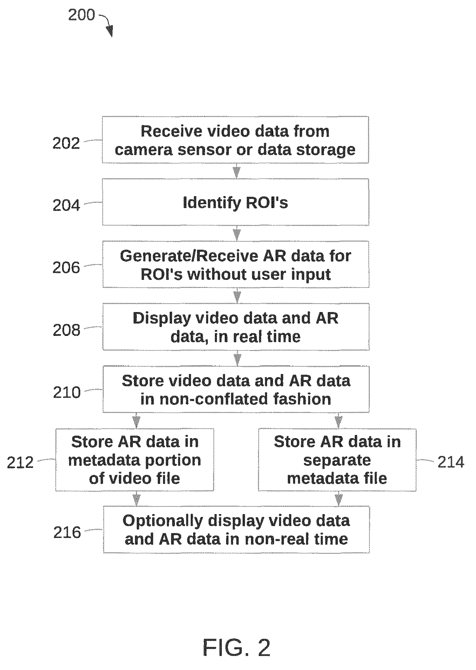

Referring additionally to FIG. 2, an augmented reality processing technique is now described. The processor 112 collects frames of video data, optionally in real time (Block 202), optionally from a camera sensor 118, and may optionally operate the audio transducer 135 to obtain an audio recording contemporaneous with the frames of video data. The processor 112 may collect the video data from recorded content as well. As each frame of video data is collected, the processor 112 operates so as to identify regions of interest (ROI) in that frame (Block 204). Example ROIs include human faces, objects, portions of landscapes, portions of the sky, etc.

The processor 112 then generates augmented reality data for the ROIs without receiving user input (Block 206), or with received user input in some instances. By generating the augmented reality data for the ROI's without receiving user input, it is meant that the data comes from either sensors or from databases, and is not manually entered (such as by a human listening to speech and manually entering appropriate subtitles via a keyboard). Although some augmented reality data for the ROIs may be entered in such a fashion, some augmented reality data will not be.

For example, the processor 112 may generate the augmented reality data by reading or acquiring data from internal sensors. Thus, the processor 112 may generate the augmented reality data by reading the orientation of the camera sensor 118, reading a GPS coordinate of the location of the electronic device 100 at the time the video data was acquired from the GPS receiver 122, reading weather conditions associated with the ROIs or the location of the electronic device 100 at the time of image capture from the barometer 128, reading data from the accelerometer 124, or reading data from the compass 126. The processor 112 may also generate the augmented reality data by receiving the above data over the Internet via the transceiver 120, such as from a source that provides real time weather data for a given GPS coordinate location.

In addition, the processor 112 may generate the augmented reality data by analyzing the video data itself, or by analyzing audio data captured contemporaneously with the video data. For example, the processor 112 may generate the augmented reality data by performing audio analysis on sound originating from the video data, or may generate the augmented reality data by performing image analysis on the ROIs, performing character recognition on the ROIs, performing object recognition on the ROIs, and performing an image search on image data of the ROIs. This may be done locally by the processor 112, or the processor 112 may employ a remote source over the Internet for these purposes. In addition, the processor 112 may combine local and remote sources (the non-volatile storage 116, and a remote data source 130) for this analysis.

Each item of augmented reality data is contextually related to its respective ROI. A contextual relation means information about the images shown in the ROIs themselves, or information relating to the capture of the images shown in the ROIs themselves. A contextual relation does not mean Information such as a time/date stamp, or subtitles to speech or sounds, is not meant.

The processor 112 optionally, in real time, displays the video data and augmented reality data on the display 114 (Block 208). The augmented reality data is overlaid on top of the video data. For example, the names of individuals in the video data may be displayed in text floating above or adjacent to their respective heads, or information about an object may be displayed in text floating above or adjacent to the object.

As the video data and augmented reality data are displayed by the processor 112 on the display 114, they are stored by the processor 112 in the non-volatile storage 116 in a non-conflated fashion (Block 210). By being stored in a non-conflated fashion, it is meant that the augmented reality data is not simply stored as video data replacing portions of the video data that it overlays, but is instead stored either as metadata of a video file itself (Block 212), or as a separate metadata file (Block 214). For example, the augmented reality data may be stored as supplemental enhancement information (SEI) for a video file encoded or compressed using H.264 or HEVC algorithms, or in a separate augmented reality text file (i.e..art) associated with the video file. The augmented reality data may also be stored in container user data in some instances. This storage of the video data and augmented reality data need not be done at the time of playback, and may be done either before playback, or in the absence of playback in some instances.

In the case where the augmented reality data is stored as metadata of the video file itself or as an augmented reality text file, the metadata fields may include the following, for each ROI:
START -> STOP TIME STAMPS
LENGTH OF STRUCTURE/DATA
NUMBER OF GIVEN ROI[N]
ROI TYPE[N]
ROI[N]
THUMBNAIL OF OBJECT ROI (optional)
LATITUDE (optional)
LONGITUDE (optional)
USER COMMENT (optional)

Other fields may be includes as well. Example metadata may be:
00:04:25,166 --> 00:04:28,625 // Start Stop PTS
52 // Length of Structure/data
1 // Number of Rect
1 // ROI type-face
400 400 600 600 // ROI
0.8 //Latitude
1.2//Longitude
Euro Tour was so much fun //User_Comment
00:04:29,751 → 00:04:31,044
<Parameters>
#idx
Offset 0
Offset 53
---
Offset 12802
#CNT
98 12804 // Cout of AR structures. Offset of index
#VER
V2.0
ART#

An advantage to storing the metadata in a separate augmented reality data text file is the easy updating thereof at a later point in time by either altering or replacing the data, as well as adding new fields of data. Thus, for example, if a given ROI is an actor in a movie, AR playback of that movie at a later point in time can be updated to include the display of information about the actor at the current time, and not just as of the time of the original recording. As another example, if the given ROI is a famous tourist destination or landmark, AR playback can be updated to include current information about that tourist destination or landmark.

In some instances, the non-volatile storage 116 may not be local to the electronic device 100, and may instead be local to a server connected to the electronic device 100 via a local area network or the Internet. In other instances, the non-volatile storage 116 may be not local to the electronic device 100, but may instead be remote non-volatile storage 134 connected via a wired connection or a non-volatile storage 132 connected via a Bluetooth connection.

Since the video data and augmented reality data are stored, they may then be played back by the processor 112 on the display 114 in non-real time (Block 216). It should be understood that since the augmented reality data and video data are stored in a non-conflated fashion, the video data may be played back without display of the augmented reality data, even by hardware or software that does not support display of the augmented reality data.

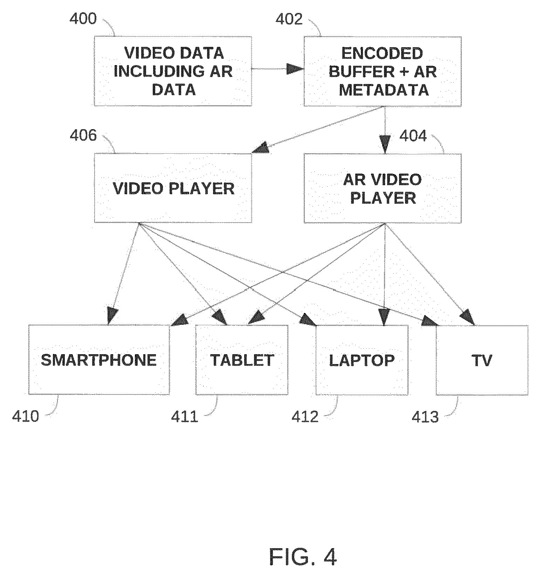

With additional reference to FIG. 4, display of the augmented reality data and video data in one embodiment are now described. The video data and AR data (Block 400) are buffered (Block 402), and then sent to either an AR capable video player (Block 404) or a plain video player that is not AP capable (Block 406). If the AR capable video player (Block 404) is utilized, the video data and AR data are played on a smartphone (Block 410), tablet (Block 411), laptop (Block 412), or TV (Block 413). If the plain video player (Block 406) is utilized, the video data is played on the smartphone (Block 410), tablet (Block 411), laptop (Block 412), or TV (Block 413).

In some instances, multiple ROIs may relate to a same object or person, and it may be desirable for the metadata to include time stamps for start-stop times of the video data encompassing contiguous presence of that object or person. Therefore, the processor 112 may determine multiple regions of interest rating to a same object or person, and determine start-stop time stamps that encompass the contiguous presence of that object or person. The processor 112 may also determine start-stop times for ROIs relating to different objects or people. Thus, the processor 112 may determine a start-stop time for some of, or each person and/or object in the video data. These start-stop times may be stored by the processor 112 in either the metadata portion of the video file, or in a separate video file, depending on where the augmented reality data is stored.

During non-real-time playback of the video data and augmented reality data by the processor 112, new augmented reality data that is contextually related to the augmented reality data may be displayed superimposed on the augmented reality data as it is played in non-real-time. For example, the augmented reality data may include an advertisement displayed superimposed over a wall so as to advertise product A. The new augmented reality may thus be an advertisement for product B that is superimposed on product A.

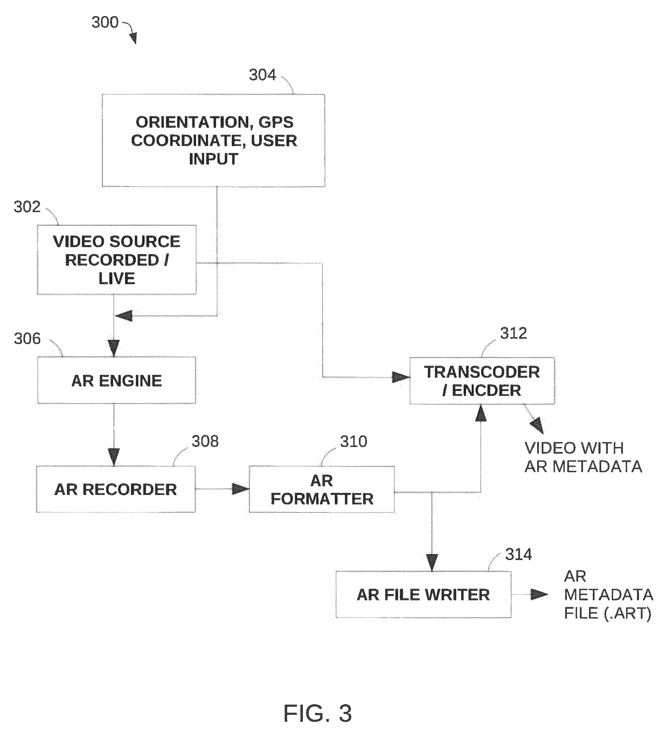

With additional reference to the flowchart 300 of FIG. 3, generation of the augmented reality data by the processor 112 is now described. First, the video data is acquired from either the camera sensor 118 or the non-volatile storage 116 (Block 302). The video data is sent together with AR data, such as orientation of the device 100, GPS coordinates, or user input from Block 304, to an AR engine (Block 306) executing on the processor 112. The AR engine (Block 306) performs image analysis, face recognition, object recognition, and generates ROIs from the objects or faces. The AR engine (Block 306) combines the AR data received from Block 304 with the generated ROIs and other data (results of image analysis, face recognition, object recognition) and sends it to the AR recorder (Block 308) executing on the processor 112.

The AR recorder (Block 308) takes the AR data, other data, and the ROIs and processes it into usable data for recordation. In the process, the AR recorder (Block 308) may record start and stop time stamps for the ROIs as described above. The AR recorder (Block 308) sends the results to the AR formatter (Block 310) executing on the processor 112. The AR formatter (Block 310) uses the received data and formats it into the desired format, and then sends it to the AR file writer (Block 314), which stores the AR data in an augmented reality data file, such as an .art file. Additionally or alternatively, the AR formatter (Block 310) sends the formatted AR data to the transcoder/encoder (Block 312), which also receives the video data from the video source (Block 302). The transcoder/encoder (Block 312) combines the video data with the formatted AR data to create video with embedded AR metadata.

The intent of the disclosure above, as explained, is the storage of AR ROI's and data from any suitable sensor as metadata, so that later retrieval of said metadata is possible in the absence of additional processing. That said, it should be noted that the augmented reality metadata as described and used herein does not include closed captions for speech or sounds, or visual time and date stamps.

While the disclosure has been described with respect to a limited number of embodiments, those skilled in the art, having benefit of this disclosure, will appreciate that other embodiments can be envisioned that do not depart from the scope of the disclosure as disclosed herein. Accordingly, the scope of the disclosure shall be limited only by the attached claims.

## Claims

1. A method for operating an augmented reality system, comprising:
acquiring video data;
identifying at least one region of interest within the video data;
generating augmented reality data for the at least one region of interest without receiving user input, the augmented reality data being contextually related to the at least one region of interest;
displaying the video data with the augmented reality data superimposed thereupon in real time as the video data is acquired; and
storing the video data and the augmented reality data in a non-conflated fashion.

2. The method of claim 1, further comprising acquiring audio data from an audio transducer contemporaneously with acquisition of the video data; and wherein the contextual relation between the augmented reality data and the at least one region of interest comprises results of audio analysis performed on sound originating from the at least one region of interest.

3. The method of claim 1, wherein the video data is stored in a video file, and wherein the augmented reality data is stored in a metadata portion of the video file.

4. The method of claim 1, wherein the video data is stored in a video file; and wherein the augmented reality data is stored in a metadata file separate from but associated with the video file.

5. The method of claims 3 or 4, wherein the at least one region of interest comprises multiple regions of interest; and further comprising:
determining multiple regions of interest that relate to a same object;
determining at least one start-stop time stamp that encompasses contiguous presence of at least one of the multiple regions of interest in the video data;
determining at least one start-stop time stamp for regions of interest that relate to different objects; and
storing the at least one start-stop time stamp that encompasses the contiguous presence of the multiple regions of interest in the video data and the at least one start-stop time stamp for regions of interest that relate to different objects in the metadata portion of the video file or the metadata file separate from but associated with the video file.

6. The method of claim 1, further comprising displaying the stored video data in non-real-time.

7. The method of claim 6, wherein new augmented reality data contextually related to the augmented reality data is displayed superimposed on the stored video data as it is displayed in non-real-time.

8. The method of claim 6, wherein at least some of the augmented reality data is also displayed superimposed on the stored video data as it is displayed in non-real-time.

9. The method of claim 1 or claim 6, wherein the contextual relation between the augmented reality data and the at least one region of interest comprises at least one of: an orientation of a camera sensor that acquires the video data, a GPS coordinate of where the video data is acquired, results of image analysis performed on the at least one region of interest, results of facial recognition performed on the at least one region of interest, results of character recognition performed on the at least one region of interest, results of object recognition performed on the at least one region of interest, results of an image search performed on the at least one region of interest, weather conditions associated with the at least one region of interest, an accelerometer reading, and a compass reading.

10. The method of claim 9, further comprising updating the stored augmented reality data.

11. The method of claim 9, further comprising accepting user edits of the stored augmented reality data and/or the at least one region of interest.

12. An electronic device, comprising:
a camera sensor;
a display;
a non-volatile storage unit;
a processor configured to:
acquire video data from the camera sensor;
identify at least one region of interest within the video data;
generate augmented reality data for the at least one region of interest without receiving user input, the augmented reality data being contextually related to the at least one region of interest;
display the video data with the augmented reality data superimposed thereupon, in real time as the video data is acquired from the camera sensor, on the display; and
store the video data and the augmented reality data in the non-volatile storage unit.

13. The electronic device of claim 12, wherein the processor stores the video data in a video file in the non-volatile storage unit; and wherein the processor stores the augmented reality data in a metadata portion of the video file.

14. The electronic device of claim 12, wherein the video data is stored in a video file; and wherein the augmented reality data is stored in a metadata file separate from but associated with the video file.

15. The electronic device of claims 13 or 14, wherein the at least one region of interest comprises multiple regions of interest; and wherein the processor is further configured to:
determine multiple regions of interest that relate to a same object;
determine at least one start-stop time stamp that encompasses contiguous presence of the multiple regions of interest in the video file;
determine at least one start-stop time stamp for regions of interest that relate to different objects; and
store the at least one start-stop time stamp that encompasses the contiguous presence of the multiple regions of interest in the video file and the at least one start-stop time stamp for regions of interest that relate to different objects in the metadata portion of the video file or in the metadata file separate from but associated with the video file, in the non-volatile storage unit.
